# EUROPÄISCHE PATENTSCHRIFT

(11) **EP 1 458 458 B1**
(45) Veröffentlichungstag und Bekanntmachung des Hinweises auf die Patenterteilung: **21.02.2007**
(21) Anmeldenummer: 02804888.2
(22) Anmeldetag: 11.12.2002
(51) Int. Cl.: B01D 46/46, B60H 3/06, F02M 35/09

(54) **VERFAHREN UND VORRICHTUNG ZUR DETEKTION DES ZUSTANDES EINES VON EINEM LUFTSTROM BEAUFSCHLAGTEN FILTERS**
METHOD AND DEVICE FOR DETECTING THE STATE OF A FILTER SUBJECTED TO AN AIR FLOW
PROCEDE ET DISPOSITIF DE DETECTION DE L'ETAT D'UN FILTRE SOUMIS A UN COURANT D'AIR

(30) Priorität: 19.12.2001 DE 10162806
(43) Veröffentlichungstag der Anmeldung: 22.09.2004
(73) Patentinhaber: Behr GmbH & Co. KG, 70469 Stuttgart (DE); Behr-Hella Thermocontrol GmbH, D-70469 Stuttgart (DE)
(72) Erfinder: FREY, Marcus, 71404 Korb (DE); GRÖMMER, Christian, 88719 Stetten (DE); PANKRATZ, Harri, 59494 Soest (DE)
(74) Vertreter: Riedel, Peter
(86) Internationale Anmeldenummer: PCT/EP2002/014059
(87) Internationale Veröffentlichungsnummer: WO 2003/051489

(56) Entgegenhaltungen:
- DE-A- 3 629 346
- DE-A- 4 014 442
- DE-U- 29 907 477
- PATENT ABSTRACTS OF JAPAN vol. 1996, no. 08, 30. August 1996 (1996-08-30) & JP 08 086485 A (SEKISUI CHEM CO LTD), 2. April 1996 (1996-04-02)
- PATENT ABSTRACTS OF JAPAN vol. 1999, no. 08, 30. Juni 1999 (1999-06-30) & JP 11 070310 A (SHARP CORP), 16. März 1999 (1999-03-16)
- PATENT ABSTRACTS OF JAPAN vol. 012, no. 455 (C-548), 29. November 1988 (1988-11-29) & JP 63 178814 A (MATSUSHITA SEIKO CO LTD), 22. Juli 1988 (1988-07-22)

## Beschreibung

Die Erfindung betrifft ein Verfahren zur Detektion des Zustandes eines von einem Luftstrom beaufschlagten Filters insbesondere zur Reinigung der einem Fahrzeuginnenraum zugeführten Umgebungsluft sowie eine Vorrichtung zur Durchführung des Verfahrens.

In luftführenden Anlagen wie beispielsweise Belüftungs- und/oder Klimaanlagen in Gebäuden oder Fahrzeugen sind üblicherweise Filter vorgesehen, um die einem Innenraum zugeführte Luft zu reinigen und insbesondere die darin mitgeführten Partikel auszuscheiden. Die Standzeit eines Filterelementes ist äußerst unterschiedlich und mehreren Einflüssen unterworfen, wobei vornehmlich die Partikelmenge Einfluß nimmt. Damit die Filterelemente nicht bereits zu einem Zeitpunkt gewechselt werden, zu dem die Standzeit noch nicht erreicht ist, aber andererseits der Verschmutzungsgrad des Filterelementes festgestellt werden kann, wurde bereits in der DE 36 31 258 C2 eine Filtervorrichtung vorgeschlagen, die eine Filterhülse umfaßt, die radial durchströmt wird und bei der radial außerhalb der Filterhülse ein Lichtstrahlsender und radial innerhalb der Filterhülse ein lichtempfindlicher Empfänger als photoelektrische Überwachungseinrichtung angeordnet sind.

Ein Nachteil einer solchen Anordnung ist darin zu sehen, daß dieses Meßprinzip bei Filtermaterialien, die dunkle Stoffe enthalten, insbesondere bei Kombinationen aus Geruchs- und Partikelfilter, sogenannten Hybridfiltern, nicht einsetzbar ist.

Aus der DE 40 14 442 A1 ist eine Vorrichtung zur Anzeige eines Verschmutzungsgrades von Luftfiltern bekannt. Dabei ist als Meßanordnung eine Lichtschranke vorgesehen, die den Verschmutzungsgrad optisch erfaßt und in ein elektrisches Ausgangssignal umwandelt, auf dessen Grundlage eine Anzeige erfolgt.

In Patent Abstracts of Japan 1996, Nr. 08 vom 30.08.96, Publication-Nr. 08086485 ist ein Küchenlüfter beschrieben, bei dem der Verschmutzungsgrad mittels eines Reflexionsdetektors erfaßt wird und das Sensorsignal einem Mikroprozessor zugeführt wird. Bei Überschreitung eines vorgegebenen Wertes erfolgt eine entsprechende Anzeige.

Der Erfindung liegt daher die Aufgabe zugrunde ein Verfahren und eine Vorrichtung zur Detektion des Zustandes eines von einem Luftstrom beaufschlagten Filters zu schaffen, wobei unabhängig vom Aufbau des Filters auf einfache Weise eine Erfassung des Verschmutzungsgrades des Filters möglich ist.

Diese Aufgabe wird durch ein Verfahren mit den Merkmalen des Anspruchs 1 sowie durch eine Vorrichtung mit den Merkmalen des Anspruchs 6 gelöst.

Mit der vorliegenden Erfindung ist es auf einfache Weise möglich, den Verschmutzungsgrad bzw. Beladungszustand des Filters mit Partikeln aktuell zu erfassen, unabhängig davon, ob es sich um einen reinen Partikelfilter, einen Hybridfilter oder einen anderen Filter handelt. Wesentlich ist lediglich, daß sich die Reflexionseigenschaften der Oberfläche des Filterelementes innerhalb der Nutzungsdauer erfaßbar ändern. Auf die Dicke der Filterschicht oder deren Zusammensetzung kommt es für die Funktion des Verfahrens bzw. der Vorrichtung nicht an, so daß unterschiedliche Filtertypen eingesetzt werden können, ohne daß die Vorrichtung angepaßt oder verändert werden muß. Daraus ergibt sich auch der Vorteil, daß bei Filtervarianten innerhalb einer Belüftungs-, Heizungs- oder Klimaanlage die Vorrichtung stets den gleichen Aufbau aufweist und eine individuelle Bestückung mit einem Filterelement je nach Kundenwunsch oder Umgebungsbedingungen erfolgen kann. Außerdem ist von Bedeutung, daß das im Empfänger erzeugte Signal einem Mikroprozessor zugeführt und von diesem unter Einbeziehung weiterer Parameter der aktuelle Wert der Partikelbeladung des Filters ermittelt wird. Bei Auswertung des betreffenden Signals in einem Mikroprozessor ist es auch vorteilhaft, daß aus dem ersten nach einem Filterwechsel im Empfänger erzeugten Signal in dem Mikroprozessor der Typ des Filters bestimmt wird. Da die unterschiedlichen Filterelemente auch Unterschiede in den Reflexionseigenschaften ihrer Oberflächen aufweisen, kann anhand des in dem Empfänger erzeugten Stromes aufgrund eines abgespeicherten Referenzwertes der Filtertyp bestimmt werden.

Gemäß einer Ausführungsform des Verfahrens trifft das Strahlenbündel in einem beliebigen Winkel zur Ebene der vom Luftstrom angeströmten Seite des Filterelementes auf. Um bei einer solchen Anordnung die durch die Plissierung entstehende Schattierung für die Meßvorrichtung zu eliminieren, sollte als Abstand zwischen dem Sender und der angeströmten Fläche des Filters ein Mindestabstand eingehalten werden.

Gemäß einer Ausführungsvariante des Verfahrens wird vorgesehen, daß der Winkel zwischen auftreffendem und reflektiertem Strahlenbündel ein sehr spitzer Winkel ist. Dadurch ist es möglich, das Strahlung, wie beispielsweise Licht, emittierende Bauteil und den Empfänger baulich in unmittelbarer Nähe zueinander anzuordnen, wobei es als besonders vorteilhaft angesehen wird, wenn diese in einem gemeinsamen Gehäuse aufgenommen sind.

Das im Empfänger erzeugte Signal kann auf unterschiedliche Weise genutzt werden, beispielsweise zur Erzeugung eines Ausgangssignals, zur Aktivierung eines Schwellwertschalters oder zum Vergleich mit einem Referenzwert in einer Vergleichsstufe.

In Weiterbildung der erfindungsgemäßen Vorrichtung ist vorgesehen, daß das Strahlung, wie beispielsweise Licht, emittierende Bauteil ein Infrarotsender und der Empfänger ein Infrarotsensor sind. Die örtliche Festlegung des Senders und des Sensors kann von unterschiedlichen Bedingungen abhängig sein, wobei unter anderem die Strömungsverhältnisse in dem vor dem Filter liegenden Bereich berücksichtigt werden müssen. Zur Exaktheit des Meßergebnisses kann der Abstand des Senders zur Anströmseite des Filters oder Einfallswinkel des Strahlenbündels so gewählt werden, daß die Oberfläche des Filters als gleichmäßig reflektierende Fläche erscheint. Aus baulichen Gründen kann es zweckmäßig sein, daß das Bauteil und der Empfänger nahe beieinander vorzugsweise in einem gemeinsamen Gehäuse angeordnet sind.

Ausführungsbeispiele der erfindungsgemäßen Vorrichtung sowie das Verfahren zur Detektion des Zustandes des Filters werden nachstehend anhand der Zeichnung näher erläutert. In der Zeichnung zeigt:
- Fig. 1: die schematische Darstellung einer Vorrichtung zur Detektion des Zustandes eines Filters,
- Fig. 2: eine Ausführungsvariante mit einer kombinierten Sender-/Empfänger-Einheit.

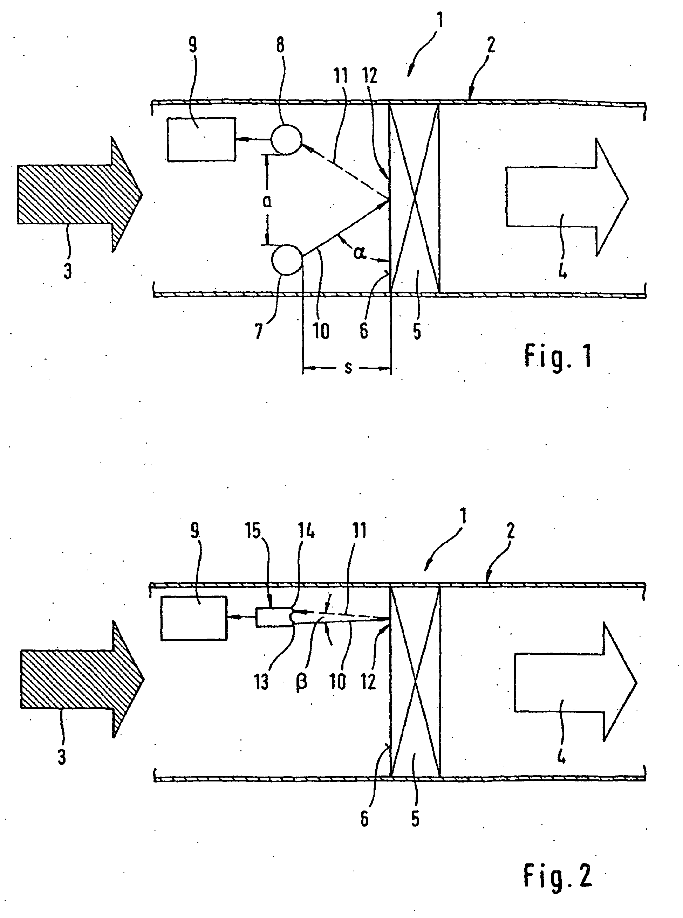

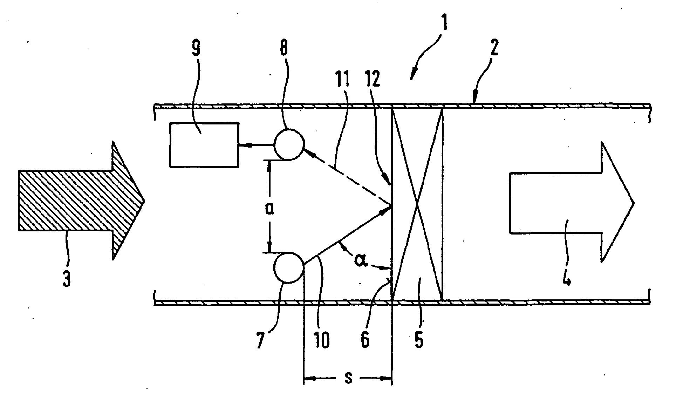

Die Fig. 1 zeigt eine Belüftungsanlage 1 mit einem Luftführungskanal 2, in dem ein Filter 5 angeordnet ist. Der Luftführungskanal 2 kann selbstverständlich auch Bestandteil einer Heizungs- und/oder Klimaanlage insbesondere eines Kraftfahrzeugs sein. Mit dem Pfeil 3 ist der Zustrom der ungefilterten Luft und mit dem Pfeil 4 die den Filter 5 verlassende gereinigte Luft bezeichnet. Der Filter 5 weist eine angeströmte Seite 6 auf, die sich im gezeigten Ausführungsbeispiel quer zur Richtung des Luftführungskanals 2 erstreckt. Selbstverständlich sind auch andere Einbauverhältnisse des Filters 5 im Luftführungskanal 2 möglich, wobei die angeströmte Seite 6 einen beliebigen Winkel zur Richtung des Luftführungskanals 2 einnehmen kann. Bei den für derartige Zwecke verwendeten Filtern 5 handelt es sich üblicherweise um Partikelfilter oder aus unterschiedlichen Filtermaterialien kombinierte Hybridfilter, die sowohl zur Ausscheidung von Partikeln als auch zur Adsorption von Aerosolen oder Aromastoffen dienen. Das ein- oder mehrlagige Filtermaterial wird plissiert, wodurch eine äußerst große Oberfläche in Relation zum Querschnitt des Luftführungskanals 2 entsteht.

Wie aus Fig. 1 weiter ersichtlich ist, befindet sich im Luftführungskanal 2 auf der Seite des Filters 5, die von der ungefilterten Luft 3 beaufschlagt wird, ein Sender 7 und ein Sensor 8, die zum Emittieren bzw. Empfangen von insbesondere Infrarotstrahlung ausgebildet sind. Der Sender 7 als Licht emittierendes Bauteil ist in einem Abstand s zur angeströmten Seite 6 des Filters 5 angeordnet und derart ausgerichtet, daß ein emittiertes Strahlenbündel 10 auf einer Reflexionsfläche 12 des Filters 5 auftrifft. Dabei fällt das Strahlenbündel 10 unter einem Winkel α zur angeströmten Seite 6 des Filters 5 ein. Der Sensor 8 ist im Strahlungsbereich des reflektierten Strahlenbündels 11 positioniert. Entsprechend der Intensität des reflektierten Strahlenbündels 11 wird im Sensor 8 ein Strom erzeugt, der als Signal einer nachgeschalteten Signalverarbeitungseinrichtung 9 zugeleitet wird. Bei der Signalverarbeitungseinrichtung 9 kann es sich beispielsweise um einen Schwellwertschalter, um einen Vergleicher oder um einen Mikroprozessor handeln. Beim Ausführungsbeispiel der Fig. 1 sind der Sender 7 und der Sensor 8 in einem Abstand a zueinander angeordnet.

Beim Einsatz eines neuen Filters 5 ist die Oberfläche des Filters 5 an der angeströmten Seite 6 reflektierend, so daß das reflektierte Strahlenbündel 11 eine hohe Intensität hat und damit im Sensor 8 ein relativ großes Signal, beispielsweise als Photostrom, erzeugt wird. Die Abschwächung der reflektierten Infrarotstrahlung ist abhängig von der zunehmenden Partikelablagerung im Filter, d. h. mit zunehmender Filterbetriebszeit nimmt die Intensität des reflektierten Strahlenbündels 11 ständig ab. Bei Erreichen eines definierten Grenzwertes kann beispielsweise eine Einrichtung aktiviert werden, die die Notwendigkeit des Filterwechsels anzeigt.

Die Ausführungsvariante in Fig. 2 zeigt die Anordnung eines Senders 13 und eines Sensors 14 in einem gemeinsamen Gehäuse 15, so daß der Sender 13 und der Sensor 14 örtlich sehr nah beieinander liegen. Dadurch trifft das emittierte Strahlenbündel 10 derart auf die angeströmte Seite 6 des Filters 5 auf und wird von der Reflexionsfläche 12 derart reflektiert, daß sich zwischen dem Strahlenbündel 10 und dem reflektierten Strahlenbündel 11 ein relativ spitzer Winkel β von < 10° vorzugsweise < 5° ergibt. Es wird aus Fig. 2 auch deutlich, daß die Reflexionsfläche 12 an einer beliebigen Stelle der angeströmten Seite 6 des Filters 5 gebildet sein kann, da auch bei Auftreten einer örtlichen stärkeren Verschmutzung des Filters sich selbständig ein Ausgleich der Strömung aufgrund der Druckverhältnisse am Filter einstellt. Im übrigen stimmen die Bezugszeichen in Fig. 2 für gleiche Bauteile mit denjenigen der Fig. 1 überein.

In einer weiteren Ausgestaltung der Erfindung kann zusätzlich zu den in Fig. 1 und 2 dargestellten Ausführungsbeispielen auf der Abströmseite des Filters ein Reflektor oder ein weiterer Sensor vorgesehen sein. Durch eine derartige weitere Ausgestaltung ist neben der Reflexionsmessung auch eine Transmissionsmessung möglich, wodurch unter anderem auch das Nichtvorhandensein eines Filters detektiert wird.

Die Detektion bezüglich des Filtertyps und/oder des Vorhandenseins eines Filters kann auch mittels der Software in einem Mikroprozessor erfolgen. Hierbei kann beispielsweise die Größe des Ausgangssignals am Sensor 11 beim ersten Beginn des Fahrzeugbetriebs nach Entnahme des zu wechselnden (verschmutzten) Filters, wodurch ein "Reset-Signal" ausgelöst wird herangezogen werden. Anstelle einer derartigen Maßnahme ist es jedoch auch möglich, das Vorhandensein eines Filters durch entsprechende Kontakte bzw. Schalter im Bereich der Aufnahme des Filters im Luftführungskanal zu erfassen. Außerdem ist es mit derartigen Mitteln möglich, den Filtertyp festzustellen, wobei eine entsprechende Information einem Mikroprozessor zugeleitet werden kann.

## Patentansprüche

1. Verfahren zur Detektion des Zustandes eines vom einem Luftstrom (3) beaufschlagten Filters (5) zur Reinigung der einem Fahrzeuginnenraum zugeführten Umgebungsluft, wobei mittels eines ein Strahlenbündel (10) emittierenden Bauteils (7, 13) ein Strahlenbündel (10) auf den Filter (5) gerichtet und von einem auf Strahlung reagierenden Empfänger (8, 14) aufgenommen wird, wobei dieses im Empfänger (8, 14) erzeugte Signal zur Feststellung des Zustands des Filters (5) herangezogen wird, wobei das von dem die Strahlung emittierenden Bauteil (7, 13) ausgesandte Strahlenbündel (10) in einem Winkel (α) auf der vom Luftstrom beaufschlagten Oberfläche (angeströmte Seite 6) des Filters (5) auftrifft und von der Oberfläche reflektiert sowie von dem Empfänger (8, 14) erfaßt wird und in Abhängigkeit von der Intensität des reflektierten Strahlenbündels (11) von dem Empfänger (8, 14) ein Signal erzeugt wird, wobei das im Empfänger (8, 14) erzeugte Signal einem Mikroprozessor zugeführt und in diesem unter Einbeziehung weiterer Parameter der aktuelle Wert der Partikelbeladung des Filters (5) ermittelt wird, wobei aus dem ersten nach einem Filterwechsel im Empfänger (8, 14) erzeugten Signal in dem Mikroprozessor das Vorhandensein eines Filters (5) erkannt und der Typ des Filters (5) bestimmt wird.

2. Verfahren nach Anspruch 1,
**dadurch gekennzeichnet, daß** der Winkel (β) zwischen auftreffendem und reflektiertem Strahlenbündel (10, 11) ein spitzer Winkel ist.

3. Verfahren nach Anspruch 2,
**dadurch gekennzeichnet, daß** der Winkel (β) zwischen auftreffendem und reflektiertem Strahlenbündel (10, 11) < 10° vorzugsweise < 5° beträgt.

4. Verfahren nach einem der Ansprüche 1 bis 3,
**dadurch gekennzeichnet, daß** das im Empfänger (8, 14) erzeugte Signal einem Schwellwertschalter zugeleitet wird.

5. Verfahren nach einem der Ansprüche 1 bis 3,
**dadurch gekennzeichnet, daß** das im Empfänger (8, 14) erzeugte Signal einer Vergleichsstufe zugeführt und in dieser mit einem Referenzwert verglichen wird.

6. Vorrichtung zur Detektion des Zustandes eines von einem Luftstrom (3) beaufschlagten Filters zur Reinigung der einem Fahrzeuginnenraum zugeführten Umgebungsluft mit einem Strahlung emittierenden Bauteil (7, 13), wobei ein von diesem ausgesandtes Strahlenbündel (10) in einem Winkel (α) auf der vom Luftstrom beaufschlagten Oberfläche (angeströmte Seite 6) des Filters (5) auftrifft und mit einem auf Strahlung reagierenden Empfänger (8, 14), wobei das Strahlung emittierende Bauteil (7, 13) und der Empfänger (8, 14) auf der angeströmten Seite (6) des Filters (5) angeordnet sind und eine Stelle der angeströmten Seite (6) des Filters (5) eine Reflexionsfläche (12) für das von dem Bauteil (7, 13) emittierten Strahlenbündel (10) bildet, wobei ein Mikroprozessor vorhanden ist, dem das im Empfänger (8, 14) erzeugte Signal zugeführt und in diesem unter Einbeziehung weiterer Parameter der aktuelle Wert der Partikelbeladung des Filters (5) ermittelt wird und entweder der Mikroprozessor dazu vorgesehen ist, aus dem ersten nach einem Filterwechsel empfangenen Signal das Vorhandensein eines Filters (5) zu erkennen und den Typ des Filters (5) zu bestimmen oder an einer Aufnahme für den Filter (5) eine Vorrichtung vorgesehen ist, die zur Detektion sowohl bezüglich des Vorhandenseins eines Filters (5) und des Typs des eingesetzten Filters (5) dient.

7. Vorrichtung nach Anspruch 6,
**dadurch gekennzeichnet, daß** das Bauteil (7, 13) Licht emittiert und der Empfänger (8, 14) ein lichtempfindlicher Sensor ist.

8. Vorrichtung nach Anspruch 6,
**dadurch gekennzeichnet, daß** das Strahlung emittierende Bauteil (7, 13) ein Infrarotsender und der Empfänger (8, 14) ein Infrarotsensor sind.

9. Vorrichtung nach einem der Ansprüche 6 bis 8,
**dadurch gekennzeichnet, daß** das Bauteil (13) und der Empfänger (14) nahe beieinander, vorzugsweise in einem gemeinsamen Gehäuse (15) angeordnet sind.

10. Vorrichtung nach Anspruch 8,
**dadurch gekennzeichnet, daß** das Bauteil (7, 13) in einem Abstand (s) zur angeströmten Seite (6) des Filters (5) angeordnet ist, der den Einfluß der Plissierung auf das Reflexionssignal nicht mehr beeinträchtigt.

## Claims

1. Method for detecting the state of a filter (5) subjected to an air flow (3) for cleaning the ambient air fed into the interior of a vehicle, wherein a beam of rays (10) is directed onto the filter (5) by means of a component (7, 13) emitting beams of rays (10) and received by a receiver (8, 14) reacting to radiation, wherein the signal generated in the receiver (8, 14) is used to determine the state of the filter (5), wherein the beam of rays (10) transmitted by the component (7, 13) emitting the radiation impinges on the surface of the filter (5) subjected to the air flow (flow side 6) at an angle (α) and is reflected by the surface and detected by the receiver (8, 14), the receiver (8, 14) generating a signal in dependence on the intensity of the reflected beam of rays (11), wherein the signal generated in the receiver (8, 14) is fed to a microprocessor in which the current value of the particle load of the filter (5) is determined with the inclusion of further parameters, wherein the existence of a filter (5) and the type of filter (5) is determined in the microprocessor from the first signal generated in the receiver (8, 14) after a filter change.

2. Method according to claim 1,
**characterised in that** the angle (β) between the impinging and reflected beams of rays (10, 11) is an acute angle.

3. Method according to claim 2,
**characterised in that** the angle (β) between the impinging and reflected beams of rays (10, 11) is < 10° and preferably < 5°.

4. Method according to any of claims 1 to 3,
**characterised in that** the signal generated in the receiver (8, 14) is fed to a threshold switch.

5. Method according to any of claims 1 to 3,
**characterised in that** the signal generated in the receiver (8, 14) is fed to a comparator circuit and there compared to a reference value.

6. Device for detecting the state of a filter subjected to an air flow (3) for cleaning the ambient air fed into the interior of a vehicle, with a component (7, 13) emitting radiation, wherein the beam of rays (10) transmitted thereby impinges on the surface of the filter (5) subjected to the air flow (flow side 6) at an angle (α), and with a receiver (8, 14) reacting to radiation, wherein the component (7, 13) emitting radiation and the receiver (8, 14) are located on the flow side (6) of the filter (5) and an area of the flow side (6) of the filter (5) forms a reflection surface (12) for the beam of rays (10) emitted by the component (7, 13), wherein a microprocessor is provided, to which the signal generated in the receiver (8, 14) is fed and in which the current value of the particle load of the filter (5) is determined with the inclusion of further parameters, and wherein either the microprocessor is used to detect the existence of a filter (5) and the type of filter (5) from the first signal received after a filter change, or a device is provided in a location for the filter (5) to detect both the existence of a filter (5) and the type of filter (5) installed.

7. Device according to claim 6,
**characterised in that** the component (7, 13) emits light and the receiver (8, 14) is a sensor sensitive to light.

8. Device according to claim 6,
**characterised in that** the component (3, 17) emitting radiation is an infrared transmitter and the receiver (8, 14) is an infrared sensor.

9. Device according to any of claims 6 to 8,
**characterised in that** the component (13) and the receiver (14) are arranged in close proximity to one another, preferably in a common housing (15).

10. Device according to claim 8,
**characterised in that** the component (7, 13) is located at a distance (s) from the flow side (6) of the filter (5), which no longer weakens the effect of the pleating on the reflection signal.

## Revendications

1. Procédé pour la détection de l'état d'un filtre (5) soumis à un courant d'air (3) pour le nettoyage de l'air ambiant amené dans un habitacle de véhicule, un faisceau de rayons (10) étant dirigé vers le filtre (5) au moyen d'un composant (7, 13) émettant un faisceau de rayons (10) et étant reçu par un récepteur (8, 14) réagissant au rayonnement, ce signal généré dans le récepteur (8, 14) étant utilisé pour déterminer l'état du filtre (5), le faisceau de rayons (10) émis par le composant (7, 13) émettant le rayonnement frappant la surface soumise au courant d'air (face de soufflage 6) du filtre (5) sous un angle (α) et étant réfléchi par la surface et détecté par le récepteur (8, 14) et un signal étant généré par le récepteur (8, 14) en fonction de l'intensité du faisceau de rayons réfléchi (11), le signal généré dans le récepteur (8, 14) étant envoyé à un microprocesseur dans lequel la valeur réelle de la charge particulaire du filtre (5) est déterminée en tenant compte d'autres paramètres, la présence d'un filtre (5) étant détectée dans le microprocesseur à partir du premier signal généré dans le récepteur (8, 14) après un remplacement de filtre et le type du filtre (5) étant déterminé.

2. Procédé selon la revendication 1, **caractérisé en ce que** l'angle (β) entre le faisceau de rayons incident et le faisceau de rayons réfléchi (10, 11) est un angle aigu.

3. Procédé selon la revendication 2, **caractérisé en ce que** l'angle (β) entre le faisceau de rayons incident et le faisceau de rayons réfléchi (10, 11) est < 10°, de préférence < 5°.

4. Procédé selon l'une quelconque des revendications 1 à 3, **caractérisé en ce que** le signal généré dans le récepteur (8, 14) est envoyé à un commutateur de valeur seuil.

5. Procédé selon l'une quelconque des revendications 1 à 3, **caractérisé en ce que** le signal généré dans le récepteur (8, 14) est envoyé à un étage comparateur et comparé dans celui-ci à une valeur de référence.

6. Dispositif pour la détection de l'état d'un filtre soumis à un courant d'air (3) pour le nettoyage de l'air ambiant amené dans un habitacle de véhicule avec un composant (7, 13) émettant un rayonnement, un faisceau de rayons (10) émis par celui-ci frappant la surface soumise au courant d'air (face de soufflage 6) du filtre (5) sous un angle (α) et avec un récepteur (8, 14) réagissant au rayonnement, le composant émettant le rayonnement (7, 13) et le récepteur (8, 14) étant disposés sur la face de soufflage (6) du filtre (5) et un emplacement de la face de soufflage (6) du filtre (5) formant une surface de réflexion (12) pour le faisceau de rayons (10) émis par le composant (7, 13), un microprocesseur étant prévu, auquel le signal généré dans le récepteur (8, 14) est envoyé et dans lequel la valeur réelle de la charge particulaire du filtre (5) est déterminée en tenant compte d'autres paramètres, et soit le microprocesseur est prévu pour détecter la présence d'un filtre (5) à partir du premier signal reçu après un remplacement de filtre et pour déterminer le type du filtre (5) soit un dispositif est prévu dans un logement pour le filtre (5), lequel dispositif sert à détecter à la fois la présence d'un filtre (5) et le type du filtre utilisé (5).

7. Dispositif selon la revendication 6, **caractérisé en ce que** le composant (7, 13) émet une lumière et le récepteur (8, 14) est un détecteur photosensible.

8. Dispositif selon la revendication 6, **caractérisé en ce que** le composant émettant un rayonnement (7, 13) est un émetteur de rayons infrarouges et le récepteur (8, 14) est un détecteur de rayons infrarouges.

9. Dispositif selon l'une quelconque des revendications 6 à 8, **caractérisé en ce que** le composant (13) et le récepteur (14) sont disposés à proximité l'un de l'autre, de préférence dans un boîtier commun (15).

10. Dispositif selon la revendication 8, **caractérisé en ce que** le composant (7, 13) est disposé à une distance (s) de la face de soufflage (6) du filtre (5) qui ne perturbe plus l'influence du plissage sur le signal de réflexion.
